(19) **Europäisches Patentamt**
**European Patent Office**
**Office européen des brevets**

(11) **EP 3 113 091 A1**

(12) **EUROPEAN PATENT APPLICATION**

(43) Date of publication:
04.01.2017 Bulletin 2017/01

(51) Int Cl.:
*G06Q 10/08* *(2012.01)*  *G06Q 50/30* *(2012.01)*
*G06T 1/00* *(2006.01)*  *G06F 17/30* *(2006.01)*

(21) Application number: 15290170.8

(22) Date of filing: 01.07.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Amadeus S.A.S.**
**06410 Biot (FR)**

(72) Inventors:
• **Audo, Yoann**
**London, W3 7TA (GB)**

• **Daouk, Carine**
**St Albans, AL35NB (GB)**
• **Grzebien, Kamil**
**London, W54HA (GB)**
• **Samberger, Nikolaus**
**London, W139TP (GB)**
• **Miftah, Jalal**
**London, W14 0DK (GB)**

(74) Representative: **Samson & Partner Patentanwälte mbB**
**Widenmayerstraße 6**
**80538 München (DE)**

(54) **IMAGE BASED BAGGAGE TRACKING SYSTEM**

(57) Systems, methods, and computer program products for tracking baggage using images. An image of a bag being checked-in may be captured and uploaded to a baggage tracking system. The system may store the image in a baggage tracking database, and associate the stored image with records identifying the bag and/or a travel itinerary for which the bag is being used. The system may characterize images in the database by identifying keypoints in the image, and extracting descriptors from the keypoints. In response to receiving an image of an unidentified bag from a user device, the baggage tracking system may compare descriptors extracted from the received image to descriptors extracted from images stored in the database. Stored images having a sufficient number of matching descriptors may be transmitted to the user device for display to a user. The user may view the images to confirm the identity of the unidentified bag.

FIG. 1

**Description**

BACKGROUND

The invention generally relates to computers and computer software, and in particular to systems, methods, and computer program products for tracking baggage being transported by a carrier.

Passengers traveling on a public carrier often have one or more items of baggage, or bags, that are too large or heavy for the passenger to store in the passenger cabin as "carry-on" baggage, or that contain items which are not allowed into the passenger cabin. Bags that cannot be brought into the passenger cabin must be checked-in with the carrier for storage in another location, such as a cargo hold, at which point the carrier assumes responsibility for transporting the checked bags. Typically, as part of the check-in process, a check-in agent will affix a tag to the outside of each bag. Each tag may include a pre-assigned number that is associated with the passenger by a customer management system. The passenger may then be provided with one or more baggage claim checks including the numbers of the checked bags. The tag may thereby be used to identify the owner of a bag when the bag is claimed at the destination.

Occasionally, a tag will be damaged, become separated from the bag, or be damaged so that the tag is unable to identify the bag. This may result in the bag missing a connection or otherwise becoming lost, and may make it difficult for the carrier to identify the bag. Large air carriers, in particular, may process millions of items of checked baggage through thousands of airports every day. For large carriers, even a small percentage of misplaced baggage can result in significant costs. Lost baggage rates, and how quickly lost baggage is found, may also contribute to passenger satisfaction levels and carrier ratings. Moreover, misplaced baggage that is not identified by the carrier that checked the bag soon after the baggage has been separated from the original segment may be lost for the duration of the trip, if not permanently.

Thus, improved systems, methods, and computer program products for tracking checked baggage are needed that improve the ability to identify baggage, and that do not require the use of tags.

SUMMARY

In an embodiment of the invention, a system for tracking baggage is provided. The system includes one or more processors in communication with a camera, and a memory coupled to the processor. The memory stores data comprising a database and program code that, when executed by the one or more processors, causes the system to receive a request to check-in an item of baggage. In response to receiving the request, the system may capture an image of the item of baggage using the camera, and associate the image with a record that identifies the first item of baggage in the database.

In another embodiment of the invention, a method for tracking baggage is provided that includes receiving the request to check-in the item of baggage. The method includes, in response to receiving the first request, capturing the image of the item of baggage with the camera, and associating the image with the record that identifies the item of baggage in the database.

In another embodiment of the invention, a computer program product is provided that includes a non-transitory computer-readable storage medium including program code. The program code is configured, when executed by the one or more processors, to cause the one or more processors to receive the request to check-in the item of baggage. The program code may further cause the one or more processors to, in response to receiving the request, capture the image of the first item of baggage, and associate the image with the record that identifies the item of baggage in the database.

BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a baggage tracking system and a baggage tracking database in communication via a network.
FIG. 2 is a diagrammatic view of an exemplary computer for hosting the baggage tracking system and/or baggage tracking database of FIG. 1.
FIG. 3 is a perspective view of a check-in station including a camera that captures an image of a bag for transmission to the baggage tracking system of FIG. 1.
FIG. 4 is a diagrammatic view of a user device including a mobile application that may be used to capture an image of the bag of FIG. 3, and to access the baggage tracking system of FIG. 1.

FIG. 5 is a diagrammatic view illustrating extraction of descriptors from regions of an image provided by the camera of FIG. 3 or user device of FIG. 4.

FIG. 6 is a graphical view illustrating matching descriptors of FIG. 5 to determine if two images are of the same bag.

FIG. 7 is a diagrammatic view illustrating two images having a different scale with keypoints in each image matched by the descriptor matching of FIG. 6.

FIG. 8 is a diagrammatic view of an image of the bag of FIG. 6 with a background, and another image of the bag of FIG. 6 with the background redacted.

FIG. 9 is a flow-chart illustrating a process that may be executed by the baggage tracking system of FIG. 1 to identify a found bag using an image of the bag.

FIG. 10 is diagrammatic view of a baggage identification chart that may be used to provide bag parameter data to the process of FIG. 9.

DETAILED DESCRIPTION

Embodiments of the invention may be implemented by a processing and database system. The processing and database system may comprise one or more computerized sub-systems, such as a reservation system, a customer management system, a baggage reconciliation system, and a baggage tracking system. The processing and database system may also include a Passenger Name Record (PNR) database that maintains travel itinerary data, and a baggage tracking database that maintains baggage tracking data.

To track an individual item of baggage, or bag, the baggage tracking system may capture one or more images of the bag during check-in. The images may be linked with the bag, as well as a travel itinerary for which the bag is being used, by associating a record containing image data with one or more other records in the baggage tracking database. The image data may be used by the system to track the bag in the event a tag identifying the bag is lost, damaged, or otherwise fails to identify the bag. When an unidentified bag is found, an image of the bag may be captured by a user device and transmitted to the baggage tracking database, along with additional data defining one or more characteristic of the bag. The baggage tracking database may filter the stored images to provide a set of images that are consistent with the characteristics of the found bag. To match the image of the found bag to one of the filtered images, the image of the found bag may processed to identify keypoints in the image. The baggage tracking system may then extract a descriptor from an area of the image surrounding each keypoint. These descriptors may be compared to descriptors extracted from the filtered images to determine if the images match.

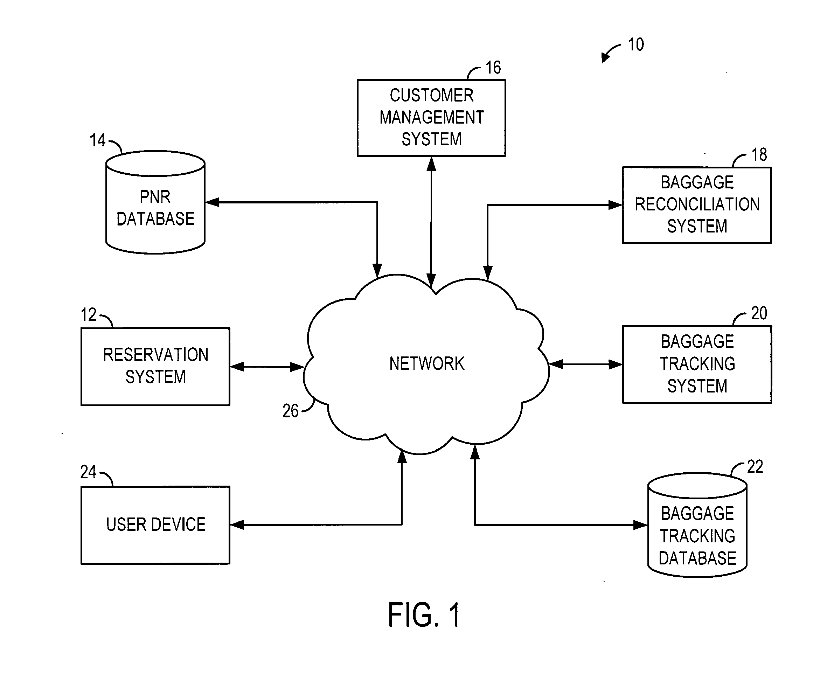

Referring now to FIG. 1, an operating environment 10 in accordance with an embodiment of the invention may include a reservation system 12, a Passenger Name Record (PNR) database 14, a customer management system 16, a baggage reconciliation system 18, a baggage tracking system 20, a baggage tracking database 22, and a user device 24. Each of the reservation system 12, PNR database 14, customer management system 16, baggage reconciliation system 18, baggage tracking system 20, baggage tracking database 22, and user device 24 may communicate through a network 26. The network 26 may include one or more private or public networks (e.g., the Internet) that enable the exchange of data.

The reservation system 12 may manage information and conduct transactions related to inventory, pricing, reserving, and booking of travel services, such as flights. The reservation system 12 may be operated by the carrier, and may be linked to a Global Distribution System (GDS) (not shown) that provides access to multiple reservation systems. The reservation system 12 may enable authorized users to reserve, book, and pay for airline tickets. The reservation system 12 may also interact with other reservation systems and third party seller systems (not shown), either directly or through the GDS, to enable a validating carrier or third party seller to sell tickets for seats provided by the operating carrier. The operating carrier may then bill the validating carrier for the services provided. The reservation system 12 may also respond to queries received from other systems for itinerary data, such as data relating to a flight or passenger.

The PNR database 14 may be provided by the reservation system 12, or another suitable system, and may be configured to maintain PNRs for the carrier. Each PNR may be generated, at least in part, by the reservation system 12, and may comprise one or more reservation records that contain itinerary and passenger information associated with one or more booked reservations. The PNR database 14 may be accessible by other systems, such as the customer management system 16, baggage reconciliation system 18, and baggage tracking system 20, and may include records storing data defining an itinerary for a particular trip, passenger, or group of passengers. The defined itinerary may include travel services from multiple travel service providers. To facilitate locating the PNR in the PNR database, a record locator or other suitable record identifier may be associated with the PNR.

The customer management system 16 may be used by a check-in agent to check-in passengers arriving at the airport, and may provide additional departure control functions. For example, the customer management system 16 may be configured to manage seat assignments, validate tickets, issue boarding passes, track boarding, and provide regulatory checks. The customer management system 16 may also manage application of carrier baggage policies and collection of baggage fees. This management may include updating the status of passengers in the PNR database 14, and updating the status of baggage in the baggage tracking database 22. The customer management system 16 may work cooperatively with the baggage tracking system 20 to enable check-in agents to upload images and other data characterizing a bag to the baggage tracking database 22, as well as check records in the baggage tracking database 22. The check-in agent may thereby update relevant baggage data to reflect the correct information or changes in status provided by the baggage reconciliation system 18, such as the baggage status being marked as loaded.

The baggage reconciliation system 18 may use real-time data to track baggage simultaneously with passenger movement as passengers and baggage travel through the airport, including on and off the aircraft. The baggage reconciliation system 18 may be configured to enable check-in staff, baggage handlers, load controllers, and carriers to exchange data in real-time regarding the status of baggage. This data may include information regarding loading, tracking, location, and management of baggage, and may be accessed on demand. The baggage reconciliation system 18 may work cooperatively with the customer management system 16 to ensure that the status of the passenger is matched with their baggage so that flights do not depart unless both the passenger and their baggage are on board the aircraft.

The baggage tracking system 20 may work cooperatively with other systems and databases to track baggage using images as well as other identifiers, such as alphanumeric identifiers printed on tags, stored in electronic devices, or otherwise physically linked to the baggage. To this end, the baggage tracking system 20 may exchange data with the reservation system 12, PNR database 14, customer management system 16, and baggage reconciliation system 18, and update the status of baggage in the baggage tracking database 22 based thereon. The baggage tracking system 20 may also provide a web-based user interface accessible by passengers who wish to check the status of their baggage online.

The baggage tracking system 20 may be configured to handle queries related to bag image processing. These queries may be received from any suitable computer, such as a terminal at a departure gate or check-in counter, a desktop computer, or a mobile device authorized to access the baggage tracking system 20. The baggage tracking system 20 may receive images, analyze images, search the baggage tracking database 22 for images that match the received images, and forward the search results to the querying system. The baggage tracking system 20 may also communicate with the reservation system 12, PNR database 14, and customer management system 16 to retrieve additional data about passengers or their bags. In particular, the baggage tracking system 20 may communicate with the customer management system 16 to obtain passenger contact information, itinerary information, and other information relating to baggage in the system, such as times and places bags were checked, loaded onto an aircraft, or arrived at an airport. This information may be used, for example, to populate lost bag claim forms, or to otherwise facilitate reuniting the passenger with a lost bag that has been identified by the baggage tracking system 20.

To improve the performance of the system's image processing functions, the baggage tracking system 20 may include one or more Graphics Processing Units (GPUs) and/or high availability clusters. The baggage tracking system 20 may also include a "debug" mode that tracks search results to determine the accuracy of the image matching algorithms. Based on feedback describing which search results successfully matched images of found bags to images of checked bags stored in the baggage tracking database 22, the baggage tracking system 20 may fine-tune one or more image matching algorithms.

In some cases, an initial image search may fail to sufficiently identify a found bag. For example, the number of matching images returned by the initial search may exceed a threshold number that can be reviewed by an agent of the carrier. In this case, the baggage tracking system 20 may schedule a search using a more complex matching algorithm for execution during off hours to narrow the search results. These more complex and resource intensive searches may be scheduled to run at a different time than the normal searches, such as in a batch overnight.

The baggage tracking database 22 may be provided by the baggage tracking system 20, or any other suitable system, and may store and manage data relating to passengers, bags, and itineraries. This data may include passenger data, baggage data, itinerary data, and tag data stored in a plurality of records managed by the baggage tracking database 22. The baggage tracking database 22 may thereby provide a globally accessible database for storing information relating to checked bags, images of the bags, and the products of calculations performed by the baggage tracking system 20, such as keypoint descriptors. The baggage tracking database 22 may include a database of baggage flagged as lost, or a "lost baggage" database. Images associated with bag records in the lost baggage database may be compared to uploaded images of found bags so that found bags can be returned to their owners.

The user device 24 may comprise a computing device such as a desktop computer, laptop computer, tablet computer, smart phone, or any other suitable computing device used send and retrieve baggage data over the network 26. A passenger may use the user device 24 to check or update the status of a bag by accessing the baggage tracking system 20. For example, the passenger may launch a browser application, and use the browser application to check or update the status of the bag on a baggage tracking website. The user device 24 may also be configured to capture an image of a bag, and transmit the image to the baggage tracking system 20 for purposes of registering a bag being checked in, or identifying a found bag.

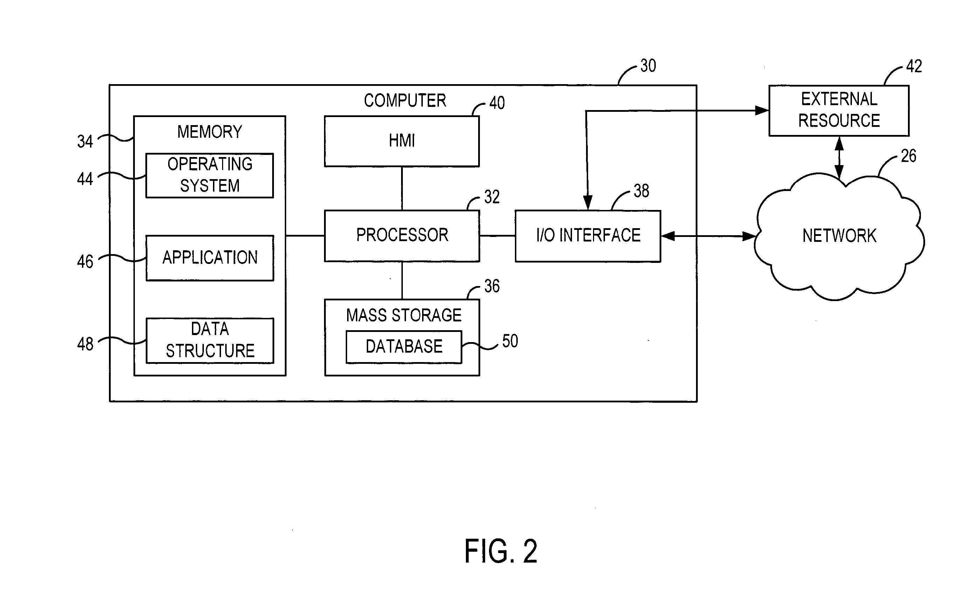

Referring now to FIG. 2, the reservation system 12, PNR database 14, customer management system 16, baggage reconciliation system 18, baggage tracking system 20, baggage tracking database 22, and user device 24 of operating environment 10 may be implemented on one or more computer devices or systems, such as exemplary computer 30. The computer 30 may include a processor 32, a memory 34, a mass storage memory device 36, an input/output (I/O) interface 38, and a Human Machine Interface (HMI) 40. The computer 30 may also be operatively coupled to one or more external resources 42 via the network 26 or I/O interface 38. External resources may include, but are not limited to, servers, databases, mass storage devices, peripheral devices, cloud-based network services, or any other suitable computer resource that may be used by the computer 30.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in memory 34. Memory 34 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, volatile or non-volatile solid state device, or any other device capable of storing information.

The processor 32 may operate under the control of an operating system 44 that resides in memory 34. The operating system 44 may manage computer resources so that computer program code embodied as one or more computer software applications, such as an application 46 residing in memory 34, may have instructions executed by the processor 32. The processor 32 may also execute the application 46 directly, in which case the operating system 44 may be omitted. The one or more computer software applications may include a running instance of an application comprising a server, which may accept requests from, and provide responses to, one or more corresponding client applications. One or more data structures 48 may also reside in memory 34, and may be used by the processor 32, operating system 44, or application 46 to store or manipulate data.

The I/O interface 38 may provide a machine interface that operatively couples the processor 32 to other devices and systems, such as the network 26 or external resource 42. The application 46 may thereby work cooperatively with the network 26 or external resource 42 by communicating via the I/O interface 38 to provide the various features, functions, applications, processes, or modules comprising embodiments of the invention. The application 46 may also have program code that is executed by one or more external resources 42, or otherwise rely on functions or signals provided by other system or network components external to the computer 30. Indeed, given the nearly endless hardware and software configurations possible, persons having ordinary skill in the art will understand that embodiments of the invention may include applications that are located externally to the computer 30, distributed among multiple computers or other external resources 42, or provided by computing resources (hardware and software) that are provided as a service over the network 26, such as a cloud computing service.

The HMI 40 may be operatively coupled to the processor 32 of computer 30 to enable a user to interact directly with the computer 30. The HMI 40 may include video or alphanumeric displays, a touch screen, a speaker, and any other suitable audio and visual indicators capable of providing data to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

A database 50 may reside on the mass storage memory device 36, and may be used to collect and organize data used by the various systems and modules described herein. The database 50 may include data and supporting data structures that store and organize the data. In particular, the database 50 may be arranged with any database organization or structure including, but not limited to, a relational database, a hierarchical database, a network database, an object-oriented database, or combinations thereof.

A database management system in the form of a computer software application executing as instructions on the processor 32 may be used to access the information or data stored in records of the database 50 in response to a query, where a query may be dynamically determined and executed by the operating system 44, other applications 46, or one or more modules. Although embodiments of the invention may be described herein using relational, hierarchical, network, object-oriented, or other database terminology in specific instances, persons having ordinary skill in the art will understand that embodiments of the invention may use any suitable database management model, and are not limited to any particular type of database.

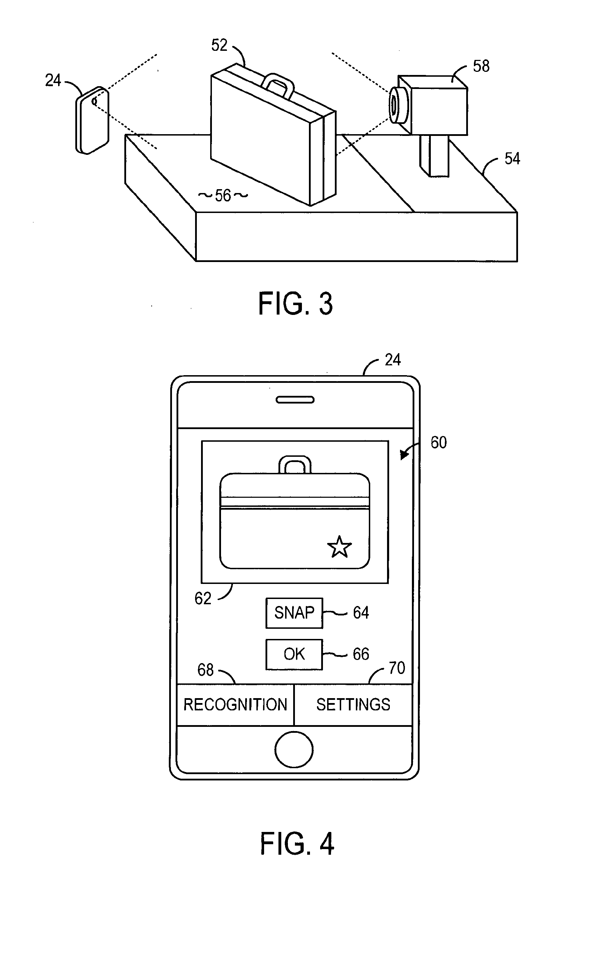

Referring now to FIG. 3, a passenger on a flight wishing to check in a bag 52 may use a check-in station 54. The check-in station 54 may be located at a check-in counter or kiosk for use by the passenger for a self-service baggage check-in process, or at the check-in counter for use by a check-in agent, for example. The check-in station 54 may comprise a platform 56 configured to accept the bag 52, and a camera 58 configured to capture an image of the bag 52 while the bag 52 is positioned on the platform 56. The passenger or check-in agent may also capture an image of the bag 52 with the user device 24, and transmit the image to the check-in station 54, or to one or more of the customer management system 16, baggage reconciliation system 18, baggage tracking system 20, or baggage tracking database 22. In addition to enabling identification of the bag 52, storing an image of the bag at check-in may allow the carrier to check the dimensions of the bag for compliance with checked bag rules and to determine any additional fees for oversized bags. The image may also enable the carrier to determine the validity of a damage claim should a damaged bag report be filed by the passenger after return of the bag 52.

The check-in station 54 may include devices for obtaining data relating to the bag 52, such as a scale that determines the weight of the bag 52 while the bag 52 is sitting on the platform 56, and one or more peripheral devices (not shown), such as a user interface or a printer. If present, the user interface of the check-in station 54 may comprise one or more data input and/or display devices, such as a keypad, bar-code scanner, or touch-screen. The user interface may provide instructions to the passenger and/or check-in agent that steps them through the check-in process. For example, the passenger may be instructed to place the bag 52 in a certain orientation with respect to the camera 58. If the baggage tracking system 20 or check-in station 54 determines that the bag 52 is not oriented properly, the check-in station 54 may provide an indication to the passenger with an instruction to reposition the bag 52. The user interface may also receive data from the passenger relating to the bag 52 or the travel itinerary of the passenger.

The check-in station 54 may facilitate automated self-service baggage in-processing by the passenger at a baggage counter, baggage check-in at the baggage counter with the assisted of a check-in agent, or at a self-serve kiosk that prompts the passenger to complete each step of the baggage check-in process. In any case, the process of checking the bag 52 may begin with the bag 52 being placed on the check-in station 54. In response to the bag 52 being placed on the check-in station 52, the check-in station 52 may cause the camera 58 to capture an image of the bag 52 and weigh the bag 52. The check-in station 52 may then determine if the bag meets size and weight limitations. If the bag 52 is not within allowable limits, the check-in station 52 may prompt the passenger to remove items from the bag 52, re-orient the bag for another picture, or otherwise instruct the passenger to take steps to bring the bag 52 into compliance. The check-in station 52 may also signal a check-in agent, who may be responsible for several check-in stations 52, to provide assistance to the passenger.

If the bag 52 is within allowable limits, the check-in station 52 may prompt the passenger, or the check-in agent rendering assistance, as the case may be, to enter data describing the bag 52. The check-in station may also prompt the passenger to enter data identifying a flight on which the bag 52 is being checked and/or present an electronic or paper document (e.g., a ticket) for scanning by the check-in station 54. The check-in station 54 may use the received data to obtain itinerary information from, and upload baggage data to, one or more of the customer management system 16, baggage reconciliation system 18, baggage tracking system 20, or baggage tracking database 22. As part of the check-in process, the check-in station 54 or kiosk may also print a paper tag for attachment to the bag, as well as other documents, such as a boarding pass.

In an embodiment of the invention, one or more cameras may be located in other areas in addition to the check-in area. Suitable locations may include along conveyor belts that transport baggage, at aircraft loading/unloading points, or in baggage claim areas. These cameras may capture images of bags, and transmit the images to the baggage tracking system 20. The baggage tracking system 20 may then identify the bags in the images, and update the location of the bag in the baggage tracking database 22 based on the location of the camera. If the location of a bag is different than expected, the baggage tracking system 20 may alert a carrier agent of the misplaced bag so that corrective steps can be taken.

Referring now to FIG. 4, the user device 24 may include a mobile application configured to facilitate check-in and tracking of the bag 52. To this end, the mobile application may provide a user interface 60 that enables the user to capture an image of a bag and upload the image to the baggage tracking system 20. The mobile application may enable check-in agents or passengers to take a picture of the bag 52 anywhere in the terminal, and upload the picture to the baggage tracking system 20. The mobile application may also allow an agent that finds an unidentified bag to identify the bag by uploading an image of the bag from the location where the bag is found.

The user interface 60 may include a frame 62 for centering the bag 52, a snap button 64, an okay button 66, a recognition button 68 that allows the user to indicate a received image is that of a found bag, and a settings button 70 that provides access to settings of the mobile application. Once the bag 52 is suitably centered in the frame 62, the user may activate the snap button 64, thereby causing the user device 24 to capture an image of the bag 52. The mobile application may be configured to crop captured images so that only parts of the image within the frame 62 are uploaded to the baggage tracking system 20.

If the captured image is satisfactory, the user may activate the okay button 66, thereby indicating that the captured image may be uploaded to the baggage tracking system 20. If the mobile application or baggage tracking system 20 determines that the orientation of the bag 52 in the image is not suitable, the mobile application may indicate this condition to the user. The mobile application may prompt the passenger to take another picture of the bag 52 from a different perspective, or otherwise reposition the bag 52 relative to the user device 24. This prompt may include instructions on how the bag 52 should be oriented within the frame 62.

In order to determine the identity of the bag 52 based on an image, the baggage tracking system 20 may analyze received images using one or more feature detection algorithms to detect suitable keypoints in the image. The baggage tracking system 20 may then extract a descriptor for each keypoint, and attempt to match the descriptors from the uploaded image to descriptors extracted from stored images in the baggage tracking database 22.

A keypoint may refer to a point in an image that identifies a region or feature having a relatively high amount of information. Keypoints may be located near features that can be used to identify the image, such as edges, corners, or blobs. An edge may comprise a boundary between two image regions, and may be defined as a set of interconnected points that have a relatively large gradient. Corners may refer to portions of an edge with rapid changes in direction, or other small regions of the image having a high gradient, e.g., a small spot or point having a high contrast relative to its background. A blob may refer to an image feature that encompasses a region. This is opposed to edges and corners, which typically have small dimensions. Blob detectors may be used to detect features having a gradient that is too low to be detected by an edge or corner detector, but that may nevertheless be useful in identifying the image.

In general, images characterized by a large number of keypoints may be more accurately matched than images characterized by fewer keypoints. However, increasing the number of keypoints may also increase the computational burden on the baggage tracking system 20. To limit the number of keypoints, the number of features used to characterize an image may be empirically tuned for each application. For example, an application that attempts to match images in real-time may use a relatively small number keypoints, while an application that works off-line to narrow search results may use relatively large number of keypoints. In any case, to determine keypoints, the image may be divided into regular regions, and a keypoint assigned to the $n$ strongest features in each region. The value of $n$ and the number of regions may be chosen to limit the number of keypoints in each image to a manageable number, e.g., 500 to 1000 keypoints per image, depending on the type of application.

To compare keypoints between images, a descriptor may be extracted for each keypoint being compared using a suitable extraction algorithm. The descriptor may comprise a feature vector that characterizes a neighborhood of pixels around the corresponding keypoint. In an embodiment of the invention, the descriptor extraction algorithm may create a set of orientation histograms in each of a plurality sub-regions within each neighborhood of pixels. These histograms may be computed from magnitude and orientation values of pixels in the neighborhood of the keypoint. The feature vector may then be defined by the values of the histograms.

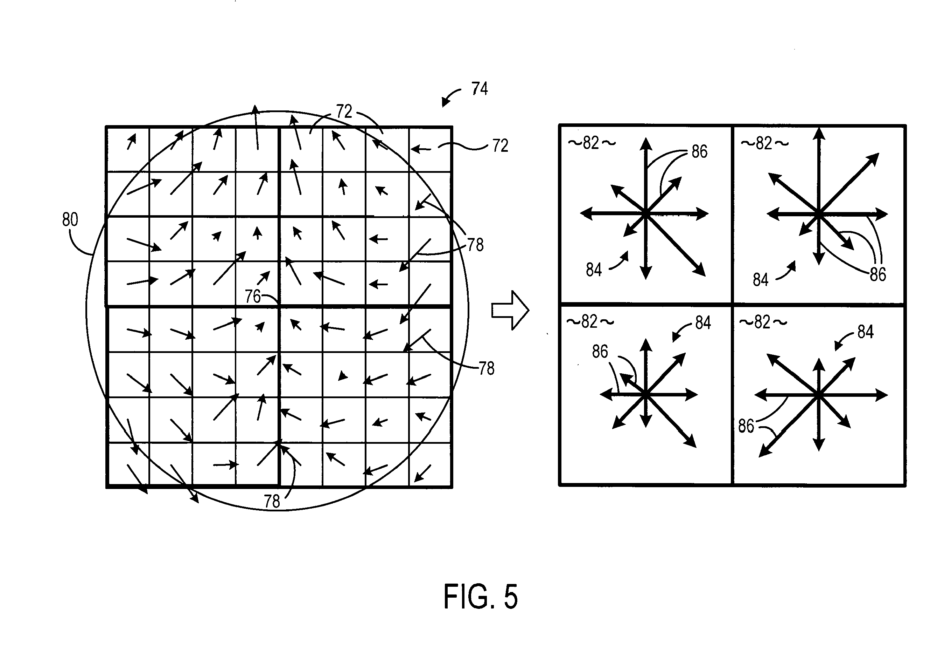

Referring now to FIG. 5, in an exemplary embodiment of the invention, a keypoint descriptor may be extracted by determining a magnitude and orientation of a gradient for each pixel 72 in a region 74 of the image in proximity to a keypoint location 76. For example, as depicted in FIG. 5, the region 74 may comprise an $m{\times}m$ (e.g., 8x8) region of pixels centered on the keypoint location 76. A pixel vector 78 may be calculated for each pixel 72 in the region 74 by computing the magnitude and orientation of the image gradient at the corresponding pixel 72. In an embodiment of the invention, the magnitude $M$ of the gradient at point $(x, y)$ may be provided by:

$$M(x,y) = \sqrt{(L(x + 1, y) - L(x - 1, y))^2 + (L(x, y + 1) - L(x, y - 1))^2}$$

where $L$ is the function for which the gradient is being determined. The magnitude $M$ may also be weighted based on the distance of the pixel from the keypoint location 76 using a Gaussian window 80. The orientation $\theta$ of the gradient at point $(x, y)$ may be provided by:

$$\theta(x,y) = tan^{-1}\left(\frac{L(x, y + 1) - L(x, y - 1)}{L(x + 1, y) - L(x - 1, y)}\right)$$

Each region 74 may be subdivided into $l{\times}l$ (e.g., 2×2) sub-regions 82, with each sub-region 82 comprising a $k{\times}k$ (e.g., 4×4) pixel neighborhood. The baggage tracking system 20 may generate an orientation histogram 84 for each sub-region 82 based on the magnitude and orientation of the pixel vectors 78 comprising the sub-region 82. The orientation histogram 84 may have $j$ bins 86, with each bin 86 oriented at an angle that is a multiple of $360/j$ degrees. By way of example, for $j = 8$ as depicted in FIG. 5, the histogram would have 8 bins each separated by 45 degrees. The magnitude of each bin 86 may be calculated by summing weighted vector projections of the pixel vectors 78 in the sub-region 82 onto a unit vector having the orientation of the corresponding bin 86. The baggage tracking system 20 may generate the descriptor in the form of a feature vector comprising the values of each of the histograms. The resulting descriptor may be highly distinctive and at least partially invariant with respect to differences in the images corresponding to luminance, perspective, orientation, etc.

For the depicted case, the resulting descriptor may comprise a vector having 4×8, or 32 dimensions. However, a person having ordinary skill in the art would appreciate that region 74 and sub-regions 82 may be defined with different dimensions *m, k*. Orientation histograms 84 may be also be defined with an arbitrary number of bins *j*. Thus, embodiments of the invention are not limited to a specific size of region, size or number of sub-regions, or histograms with a specific number of bins. Descriptors may therefore have any number of dimensions depending on the parameters chosen for extracting the descriptors. The dimensions and number of descriptors associated with each image may impact the amount of processing resources and time required to compare images.

Image matching algorithms that use a relatively low number of descriptors and/or descriptors having a relatively low number of dimensions may be less complex and system resource intensive than matching algorithms using a large number of higher dimensioned descriptors. Thus, a relatively simple matching algorithm may be able to provide fast image matching. However, lower dimensional descriptors may be less distinctive than descriptors having higher dimensions, and matching algorithms using fewer descriptors may be less selective in identifying potential matches. In contrast, matching algorithms that use a relatively large number of descriptors each having a relatively high number of dimensions may be more complex and system resource intensive, but may be more accurate and selective in identifying potential matches. Thus, a complex matching algorithm that is too slow for real-time processing may be useful for narrowing a number of search results returned by a simple matching algorithm when the number of search results is above a threshold number of images that can be reasonably reviewed by an agent.

Images for which sets of descriptors have been extracted may be compared by calculating a mathematical distance between each of the descriptors, such as a Mahalanobis or Euclidean distance. The number of descriptors that form matching pairs between the images may then be determined based on these mathematical distances.

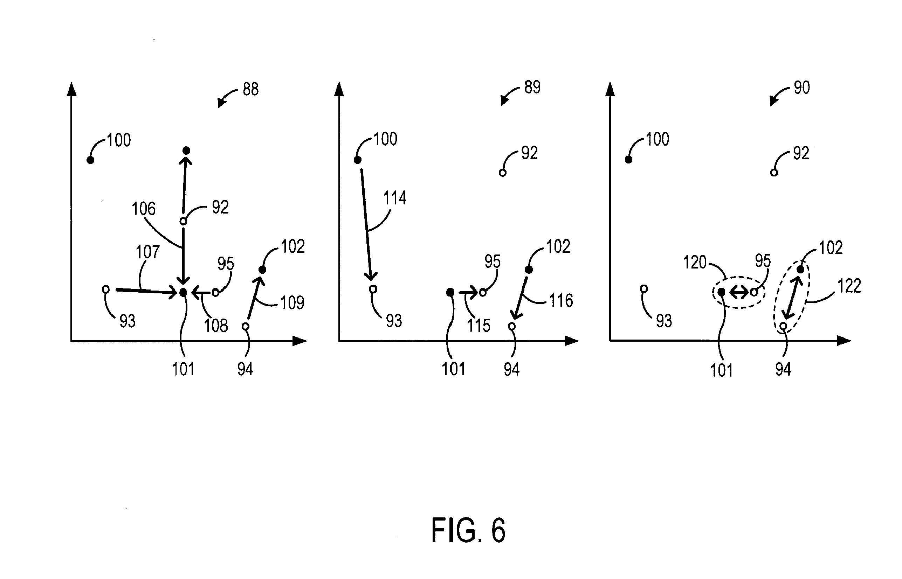

Referring now to FIG. 6, graphical diagrams 88-90 illustrate exemplary comparisons between descriptors 92-95 from one image and descriptors 100-102 from another image based on the distances between the descriptors. These comparisons may be used to define one or more matching pairs of descriptors between images. A level of matching between images may then be determined based on the number of matching pairs of descriptors.

In graphical diagram 88, the distance between each of the descriptors 92-95 of an image *A* and the descriptor's closest neighbor descriptor 100-102 from an image *B* may be determined as indicated by single-headed arrows 106-109. In graphical diagram 89, the distance between each of the descriptors 100-102 in image *B* and the closest descriptor 92-95 in image *A* may be determined as indicated by single-headed arrows 114-116.

If the distance to the closest neighboring descriptor is relatively low, and the distance to the second closest neighboring descriptor significantly larger, the baggage tracking system 20 may determine that the first match corresponds to a matching pair of keypoints. This determination may be made to due to a lack of ambiguity as to which is the closest descriptor. In contrast, if the two closest neighboring descriptors are about the same distance from the descriptor being analyze, the probability of making an erroneous match may be relatively high. Thus, the baggage tracking system 22 may reject matches between descriptors in cases where there are multiple potential matching descriptors at about the same distance. Using the above selection criteria, the baggage tracking system 20 might define descriptors 95 and 101 as a matching pair of descriptors, but not descriptors 94 and 102, since each of these descriptors has a second neighbor about the same distance away. That is, descriptor 94 is also relatively close to descriptor 101, and descriptor 102 is also relatively close to descriptor 95.

Examining graphical diagrams 88 and 89, it is apparent that descriptor 96 and descriptor 101 form a closest neighbor pair 120 because no other descriptors are similarly close. It is also apparent that although descriptor 95 and descriptor 102 each have another descriptor that is similarly close, they form a reciprocal closest neighbor pair 122. That is, they are each the other's closest neighbor. The formation of a reciprocal closest neighbor pair may be indicative of a match between the keypoints despite the presence of additional similarly close neighbors. By using scale-invariant transforms to detect keypoints and extract descriptors, keypoints identified in images of the same bag that have a different scale (e.g., taken from different distances) may be matched.

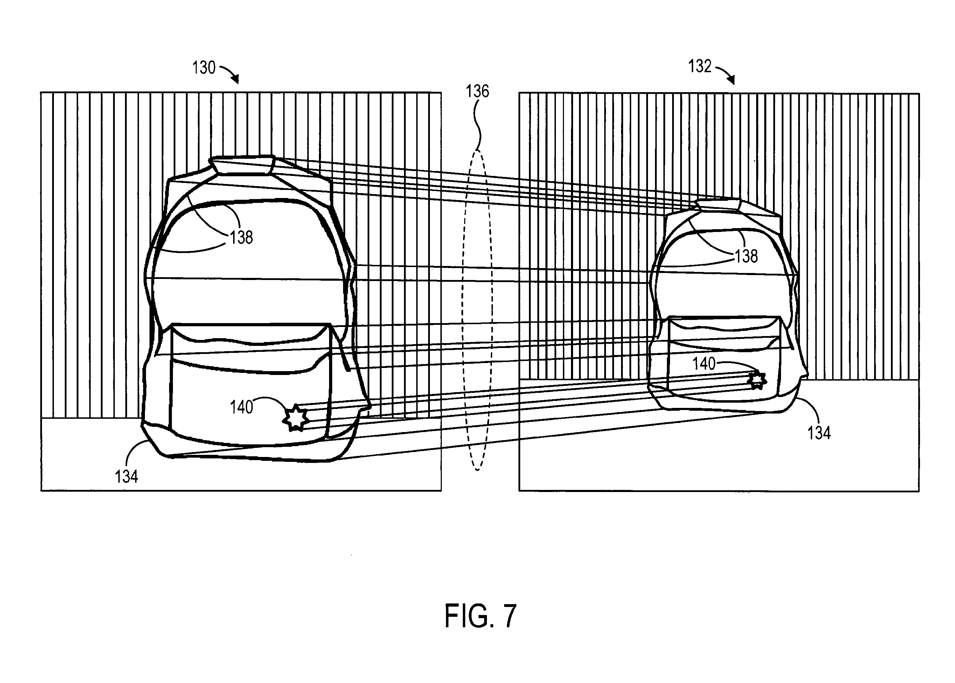

Referring now to FIG. 7, comparing descriptors extracted from images 130, 132 of a bag 134 having different scales may nevertheless identify matching keypoints in each image 130, 132, as illustrated by connecting lines 136. This may be due to the keypoints being matched based on feature characteristics that are scale invariant. Keypoints that yield descriptors which are scale invariant may be found in areas of images 130, 132 that have high-contrast. High-contrast areas may include edges 138 or graphical features, such as feature 140, and may provide stable keypoints that are scale and orientation invariant.

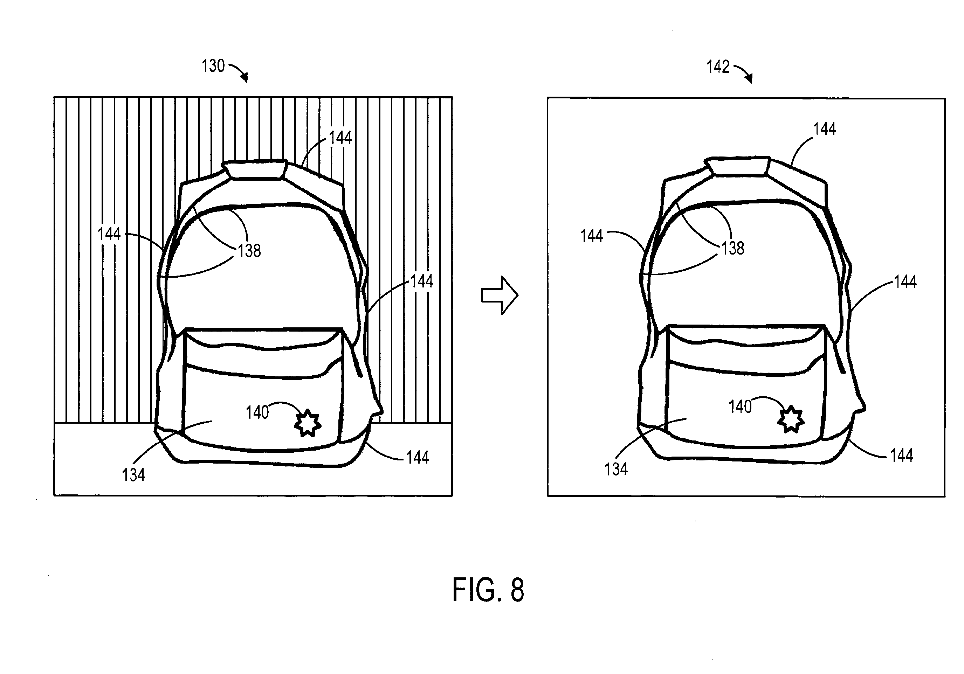

FIG. 8 depicts removal of the background from the image 130 to form an extracted image 142. To this end, keypoints may be used to detect outer edges 144 of the bag 134. Once the outer edges 144 have been identified, the pixels 72 comprising the background of the image 130 may be deleted to form the extracted image 142. The extracted image 142 may thereby generally include just the portions of the image depicting the bag 134. Removing the background may result in fewer keypoints being detected across the image as a whole. This may improve processing speed and reduce memory requirements of the baggage tracking system 20 and baggage tracking database 22 as compared to image processing systems lacking the background redaction feature. Use of the extracted image 142 may also increase the percentage of detected keypoints corresponding to the bag relative to the total number of keypoints in the extracted image 142. By allocating a higher percentage of keypoints to the portion of the image corresponding to the bag 134, removal of the image background, or background redaction, may improve the accuracy of the baggage tracking system 20 for a given level of image matching algorithm complexity.

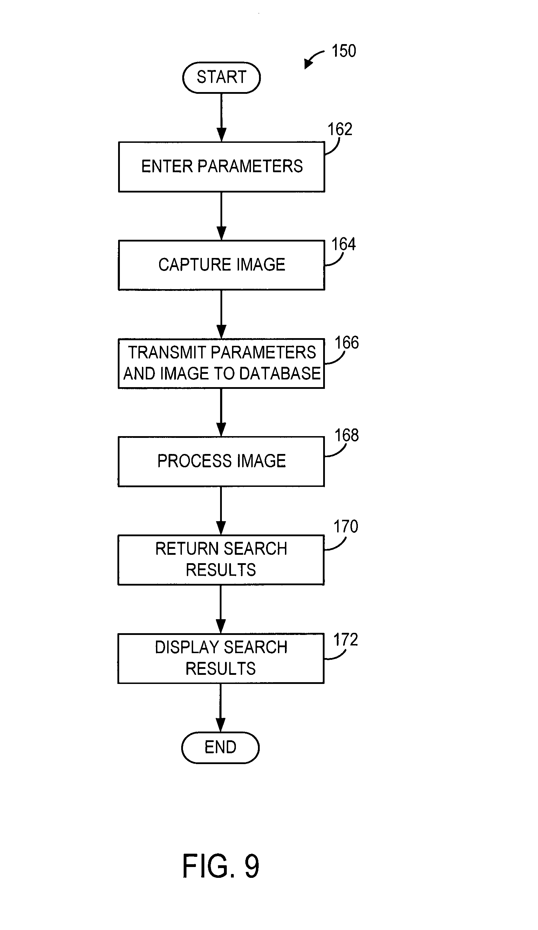

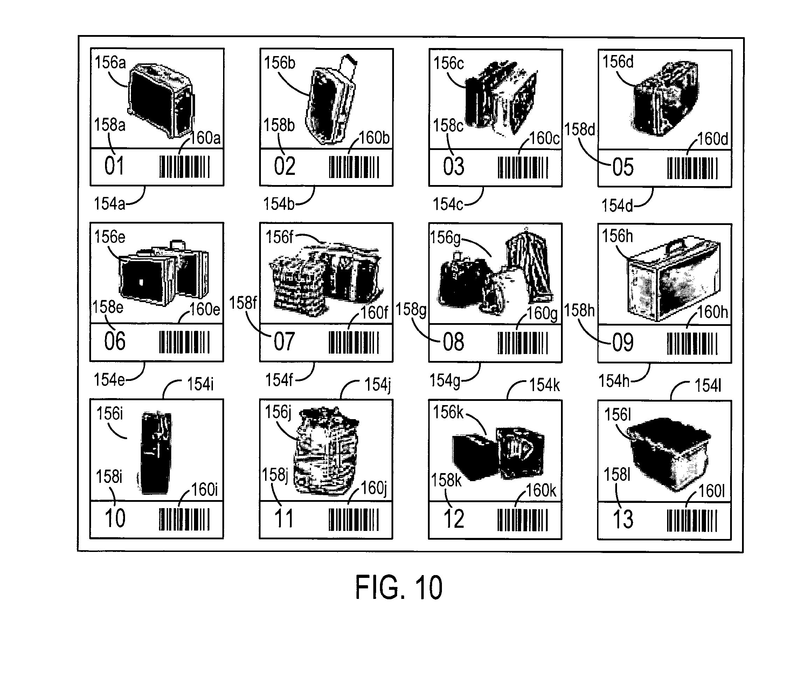

Referring now to FIGS. 9 and 10, FIG. 9 presents a flow-chart depicting a process 150 that may be executed by the baggage tracking system 20 to identify a found bag, and FIG. 10 presents a baggage identification chart 152 that includes a plurality of identification blocks 154a-154l. Each of the identification blocks 154a-154l may include an image 156a-156l depicting a type of bag represented by the identification block 154a-154l, an alphanumeric identifier 158a-158l, and a machine readable code 160a-160l, such as a barcode.

In block 162 of process 150, the user device 24 or baggage tracking system 20 may receive one or more parameters describing at least one characteristic of the found bag. These parameters may include physical characteristics of the bag, such as dimensions, type, or color, as well a flight on which the bag was found. The parameters may be entered manually through the HMI 40 of user device 24, or retrieved from one or more of the reservation system 12, PNR database 14, or customer management system 16. The parameters may also be received in response to the user device 24 scanning the machine readable code 160a-160l of the identification block 154a-154l corresponding to the found bag type. In response to scanning the machine readable code 160a-160l, the user device 24 may receive data indicative of bag details for the type of bag being scanned, such as details defined by the International Air Transport Association (IATA). Details may include dimensions, type (suitcase, duffle bag, suit bag, etc.), or any other standard characteristics of the type of bag in question.

In response to receiving the bag parameters, the process 150 may proceed to block 164. In block 164, the user device 24 may capture an image of the bag. The image may be captured, for example, by positioning the found bag in the frame 62 of user interface 60, and activating the snap button 64, as described above with respect to FIG. 4. Once the parameters and image of the bag have been received by the user device 24, the process may proceed to block 166, and transmit the parameters and image to the baggage tracking system 20.

In response to receiving the parameters and image, the process 150 may proceed to block 168 and process the received image. To this end, the baggage tracking system 20 may search the baggage tracking database 22 for images of bags that match the parameters of the found bag. In an embodiment of the invention, at least some of the parameters of the bags in the baggage tracking database may be determined by querying the customer management system 16 for passenger, bag, and/or flight data. By selecting images in the database that match the parameters of the found bag for further processing, the baggage tracking system 20 may reduce the amount of image processing necessary to match the received image to an image in the baggage tracking database 22. For example, if the found bag is a garment bag, the received image may only be compared to images classified in the baggage tracking database 22 as being of a garment bag type in order to reduce the total number of comparisons. That is, when searching for one type of bag (e.g., a garment bag), the baggage tracking system 20 may filter out images of baggage in the baggage tracking database 22 classified as being of a different type (e.g., suitcases, tote bags, and duffle bags).

The baggage tracking system 20 may also use specified image characteristics to filter images stored in the baggage tracking database 22. For example, an image may be analyzed to determine the color of the found bag, and only images of bags which are of a similar color compared to the image of the found bag. To determine the color of a bag, the baggage tracking system 20 may calculate a mean and a variance of the intensity for each of a set of color components (e.g., red, green, and blue) across the image. If the baggage tracking system 20 detects a variance in one or more of the color components across the image that exceeds a threshold, the baggage tracking system may determine the bag has multiple colors.

To classify a single color of the bag, the baggage tracking system 20 may transform the mean color values of the color components into a Hue/Saturation/Value (HSV) scale, and look for images having a similar HSV value as the found bag. Returning to the above example, if the color of the found bag is determined to be a particular color (either through image analysis or based on entered parameters), the baggage tracking system 20 may filter out images of bags having colors other than the determined color. Filtering the images in the database using the parameters of the bag may thereby improve the performance of the baggage tracking system 20 by reducing the number of image comparisons necessary to identify the found bag.

To search for images matching the found bag, the process 150 may compare the image of the found bag to each of the filtered images by detecting keypoints in the image of the found bag, extracting a descriptor for each keypoint, and comparing the descriptors extracted from the image of the found bag to descriptors extracted from the filtered images. To reduce the processing load of this search, the baggage tracking database 22 may store descriptors previously extracted from each of the stored images so that the descriptors do not have to be recalculated each time a comparison is made.

In block 170, the process 150 may return search results comprising the filtered images that have a sufficient number and quality of matching descriptors. This may comprise a single image of a bag matching the found bag in cases where the bag is visually distinctive or a complex image matching algorithm is used. In other cases, a plurality of images of bags having similar keypoint features as the found bag may be returned.

In response to receiving the search results at the user device 24, the process 150 may proceed to block 172 and cause the user device 24 to display the search results. The user may then review the search results, and indicate if any of the images returned by the baggage tracking system 20 match the found bag. In response to the user indicating that one of the images matches the found bag, the user device 24 may transmit a message to the baggage tracking system 20 indicating the bag depicted in the matching image has been found. Filtering the images stored in the baggage tracking database 22 using parameters and color of the bag, and matching images based on keypoints may reduce the number of images that must be reviewed by the user to a manageable number. Embodiments of the invention may thereby enable a system of baggage identification that relies on inherent properties of each bag rather than a tag, which is vulnerable to loss or damage.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow-charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow-charts, sequence diagrams, and/or block diagrams.

In certain alternative embodiments, the functions, acts, and/or operations specified in the flow-charts, sequence diagrams, and/or block diagrams may be re-ordered, processed serially, and/or processed concurrently consistent with embodiments of the invention. Moreover, any of the flow-charts, sequence diagrams, and/or block diagrams may include more or fewer blocks than those illustrated consistent with embodiments of the invention.

Various aspects and embodiments of the present invention are defined by the following numbered clauses:

Clause 1: A method of baggage tracking, the method comprising:

receiving, at a server, a first request to check-in a first item of baggage;

in response to receiving the first request, capturing, by a first camera in communication with the server, a first image of the first item of baggage; and

associating, in a database in communication with the server, the first image with a first record that identifies the first item of baggage.

Clause 2: The method of clause 1 further comprising:

receiving, from a user device, a second request to identify a second item of baggage, the second request including a second image of the second item of baggage;

comparing the second image with the first image; and

in response to the second image matching the first image, transmitting the first image to the user device.

Clause 3: The method of clause 2 wherein the first item of baggage has a characteristic, the database stores a plurality of images that includes the first image, and further comprising:

selecting one of the plurality of images;

determining if a corresponding item of baggage depicted by the selected image has the characteristic;

in response to the corresponding item of baggage having the characteristic, comparing the second image with the selected image; and

in response to the corresponding item of baggage not having the characteristic, not comparing the second image with the selected image.

Clause 4: The method of clause 2 or 3 further comprising:

receiving, from the user device, a message that confirms the second item of baggage is the first item of baggage; and

in response to receiving the message, updating a location of the first item of baggage to match the location of the second item of baggage.

Clause 5: The method of any one of clauses 1 to 4 wherein the database stores a first plurality of images that includes the first image, and further comprising:

receiving, from a user device, a second request to identify a second item of baggage, the second request including a second image of the second item of baggage;

comparing the second image with the first plurality of images using a first matching algorithm

in response to the first matching algorithm returning a first number of images less than a threshold, returning the first number of images to the user device; and

in response to the first matching algorithm returning a second number of images greater than the threshold, comparing the second image with the first plurality of images using a second matching algorithm more complex than the first matching algorithm.

Clause 6: The method of any one of clauses 1 to 5 further comprising:

identifying a first plurality of keypoints in the first image;

extracting a descriptor from each of the first plurality of keypoints to define a first plurality of descriptors; and

storing the first plurality of descriptors in the database.

Clause 7: The method of clause 6 further comprising:

receiving a second request to identify a second item of baggage, the second request including a second image of the second item of baggage;

identifying a second plurality of keypoints in the second image;

extracting the descriptor from each of the second plurality of keypoints to define a second plurality of descriptors;

determining a mathematical distance between each the first plurality of descriptors and each of the second plurality of descriptors;

defining a number of matching pairs of descriptors based on the mathematical distances; and

determining if there is a match between the first image and the second image based on the number of matching pairs.

Clause 8: The method of any one of clauses 1 to 7 wherein capturing the first image comprises:

determining a first orientation of the first item of baggage with respect to the first camera;
determining if the first orientation is suitable for capturing the first image; and
in response to the first orientation being suitable, activating the first camera to capture the first image.

Clause 9: The method of clause 8 further comprising:

in response to the first orientation being unsuitable, providing an indication that the first orientation is unsuitable.

Clause 10: The method of clause 9 wherein the indication comprises an instruction to reposition the first item of baggage relative to the first camera.

Clause 11: The method of any one of clauses 1 to 10 further comprising:

receiving a damaged bag report that includes an identifier of the first item of baggage and a second image of the first item of baggage;
querying the database for the first image using the identifier; and
displaying the first image and the second image on a user device.

Clause 12: The method of any one of clauses 1 to 11 further comprising:

receiving, at a user device, data indicative of a characteristic of the first item of baggage;
in response to receiving the data, displaying, on the user device, a prompt to capture the first image of the first item of baggage; and
in response to capturing the first image, transmitting the data and the first image to the database.

Clause 13: The method of any one of clauses 1 to 12 wherein the database stores data indicating a location of the first item of baggage, and further comprising:

receiving a second image of a second item of baggage from a second camera;
determining the location of the second camera;
comparing the second image with the first image; and
in response to the second image matching the first image, updating the location of the first item of baggage based on the location of the second camera.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".
While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

**Claims**

1.   A system for baggage tracking, the system comprising:

one or more processors in communication with a first camera; and
a memory coupled to the one or more processors, the memory storing data comprising a database and program code that, when executed by the one or more processors, causes the system to:

receive a first request to check-in a first item of baggage;
in response to receiving the first request, capture, with the first camera, a first image of the first item of baggage; and
associate, in the database, the first image with a first record that identifies the first item of baggage.

2. The system of claim 1 wherein the program code further causes the system to:

receive, from a user device, a second request to identify a second item of baggage, the second request including a second image of the second item of baggage;
compare the second image with the first image; and
in response to the second image matching the first image, transmit the first image to the user device.

3. The system of claim 2 wherein the first item of baggage has a characteristic, the database stores a plurality of images that includes the first image, and the program code further causes the system to:

select one of the plurality of images;
determine if a corresponding item of baggage depicted by the selected image has the characteristic;
in response to the corresponding item of baggage having the characteristic, compare the second image with the selected image; and
in response to the corresponding item of baggage not having the characteristic, not compare the second image with the selected image.

4. The system of claim 2 or 3 wherein the program code further causes the system to:

receive, from the user device, a message that confirms the second item of baggage is the first item of baggage; and
in response to receiving the message, update a location of the first item of baggage to match the location of the second item of baggage.

5. The system of any one of claims 1 to 4 wherein the program code further causes the system to:

identify a first plurality of keypoints in the first image;
extract a descriptor from each of the first plurality of keypoints; and
store each descriptor in the database.

6. The system of any one of claims 1 to 5 wherein the database stores data indicating a location of the first item of baggage, and the program code further causes the system to:

receive a second image of a second item of baggage from a second camera;
determine the location of the second camera;
compare the second image with the first image; and
in response to the second image matching the first image, update the location of the first item of baggage based on the location of the second camera.

7. A method of baggage tracking, the method comprising:

receiving, at a server, a first request to check-in a first item of baggage;
in response to receiving the first request, capturing, by a first camera in communication with the server, a first image of the first item of baggage; and
associating, in a database in communication with the server, the first image with a first record that identifies the first item of baggage.

8. The method of claim 7 wherein the database stores a first plurality of images that includes the first image, and further comprising:

13

receiving, from a user device, a second request to identify a second item of baggage, the second request including a second image of the second item of baggage;

comparing the second image with the first plurality of images using a first matching algorithm;

in response to the first matching algorithm returning a first number of images less than a threshold, returning the first number of images to the user device; and

in response to the first matching algorithm returning a second number of images greater than the threshold, comparing the second image with the first plurality of images using a second matching algorithm more complex than the first matching algorithm.

9.   The method of claim 7 or 8 further comprising:

identifying a first plurality of keypoints in the first image;

extracting a descriptor from each of the first plurality of keypoints to define a first plurality of descriptors; and

storing the first plurality of descriptors in the database;

and optionally further comprising:

receiving a second request to identify a second item of baggage, the second request including a second image of the second item of baggage;

identifying a second plurality of keypoints in the second image;

extracting the descriptor from each of the second plurality of keypoints to define a second plurality of descriptors;

determining a mathematical distance between each the first plurality of descriptors and each of the second plurality of descriptors;

defining a number of matching pairs of descriptors based on the mathematical distances; and

determining if there is a match between the first image and the second image based on the number of matching pairs.

10.  The method of any one of claims 7 to 9 wherein capturing the first image comprises:

determining a first orientation of the first item of baggage with respect to the first camera;

determining if the first orientation is suitable for capturing the first image; and

in response to the first orientation being suitable, activating the first camera to capture the first image.

11.  The method of claim 10 further comprising:

in response to the first orientation being unsuitable, providing an indication that the first orientation is unsuitable.

12.  The method of claim 11 wherein the indication comprises an instruction to reposition the first item of baggage relative to the first camera.

13.  The method of any one of claims 7 to 12 further comprising:

receiving a damaged bag report that includes an identifier of the first item of baggage and a second image of the first item of baggage;

querying the database for the first image using the identifier; and

displaying the first image and the second image on a user device.

14.  The method of any one of claims 7 to 13 further comprising:

receiving, at a user device, data indicative of a characteristic of the first item of baggage;

in response to receiving the data, displaying, on the user device, a prompt to capture the first image of the first item of baggage; and

in response to capturing the first image, transmitting the data and the first image to the database.

15.  A computer program for baggage tracking, the computer program comprising:

program code that, when executed by one or more processors, causes the one or more processors to:

receive a first request to check-in a first item of baggage;
in response to receiving the first request, capture a first image of the first item of baggage;and
associate, in a database, the first image with a first record that identifies the first item of baggage.

FIG. 1

FIG. 2

FIG. 3

FIG. 4

FIG. 5

EP 3 113 091 A1

FIG. 6

FIG. 7

EP 3 113 091 A1

FIG. 8

150

START

ENTER PARAMETERS — 162

CAPTURE IMAGE — 164

TRANSMIT PARAMETERS
AND IMAGE TO DATABASE — 166

PROCESS IMAGE — 168

RETURN SEARCH
RESULTS — 170

DISPLAY SEARCH
RESULTS — 172

END

FIG. 9

FIG. 10

**Europäisches Patentamt**
**European Patent Office**
**Office européen des brevets**

# EUROPEAN SEARCH REPORT

Application Number

EP 15 29 0170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/308918 A1 (WILKE WOLF-STEPHAN [DE]) 17 December 2009 (2009-12-17) * the whole document * ----- | 1-15 | INV. G06Q10/08 G06Q50/30 G06T1/00 G06F17/30 |
| X | US 2010/191367 A1 (GRUNDMANN HANS-JOERG [DE] ET AL) 29 July 2010 (2010-07-29) * the whole document * ----- | 1-15 | |
| X | WO 2008/003609 A1 (SIEMENS AG [DE]; BECKER LOTHAR [DE]; BRUETT JOERN [DE]; PETERS HEINZ-P) 10 January 2008 (2008-01-10) * the whole document * ----- | 1-15 | |

TECHNICAL FIELDS
SEARCHED (IPC)

G06Q
G06T
G06F

The present search report has been drawn up for all claims

| Place of search | Date of completion of the search | Examiner |
|---|---|---|
| The Hague | 19 November 2015 | Guenov, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 29 0170

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2015

| Patent document cited in search report | | Publication date | Patent family member(s) | | Publication date |
|---|---|---|---|---|---|
| US 2009308918 | A1 | 17-12-2009 | DE 102009016628 A1<br>EP 2146308 A2<br>US 2009308918 A1 | | 17-12-2009<br>20-01-2010<br>17-12-2009 |
| US 2010191367 | A1 | 29-07-2010 | CN 101765853 A<br>DE 102007035272 A1<br>EP 2174274 A1<br>US 2010191367 A1<br>WO 2009015991 A1 | | 30-06-2010<br>29-01-2009<br>14-04-2010<br>29-07-2010<br>05-02-2009 |
| WO 2008003609 | A1 | 10-01-2008 | NONE | | |

EPO FORM P0459

For more details about this annex : see Official Journal of the European Patent Office, No. 12/82